# EUROPÄISCHE PATENTANMELDUNG

(11) **EP 0 997 345 A2**
(43) Veröffentlichungstag der Anmeldung: **03.05.2000**
(21) Anmeldenummer: 99120376.1
(22) Anmeldetag: 13.10.1999
(51) Int. Cl.: B60Q 3/04

(54) **Beleuchtungsvorrichtung für eine Anzeige**

(30) Priorität: 26.10.1998 DE 19849244
(71) Anmelder: Mannesmann VDO Aktiengesellschaft, 60388 Frankfurt am Main (DE)
(72) Erfinder: Noll, Heinrich, Dr., 64823 Gross-Umstadt (DE)
(74) Vertreter: Klein, Thomas, Dipl.-Ing.

(57) **Zusammenfassung**

Ein zur Erwärmung einer Leuchtstofflampe (2) einer Beleuchtungsvorrichtung für eine Anzeige ausgeführtes elektrisches Heizelement (4) ist an einer Leiterplatte (5) mit lediglich geringem Abstand zu der Leuchtstofflampe (2) angeordnet. Dadurch wird eine gezielte Erwärmung der Leuchtstofflampe (2) in vorbestimmten Bereichen ermöglicht, wobei zugleich die Herstellung vereinfacht ist. Zugleich kann die Montage des Heizelementes (4) unabhängig von der Leuchtstofflampe (2) erfolgen und eine problemlose Anpassung an beliebig gestaltete Leuchtstofflampen (2) vorgenommen werden.

## Beschreibung

Die Erfindung betrifft eine Beleuchtungsvorrichtung für eine Anzeige, insbesondere in einem Kraftfahrzeug, mit einer Leuchtstofflampe und mit einem Heizelement für die Leuchtstofflampe.

Solche Beleuchtungsvorrichtungen mit mittels des Heizelementes beheizbaren Leuchtstofflampen werden beispielsweise zur Hintergrundbeleuchtung von Anzeigen, insbesondere auch LCD-Anzeigen, eingesetzt. Hierbei ist vor allem die Eigenschaft der großflächigen und energiesparenden Lichtabstrahlung von Leuchtstofflampen von Vorteil. Zum Ausgleich von Helligkeitsdifferenzen in unterschiedlichen Bereichen, welche insbesondere bei niedrigen Umgebungstemperaturen auftreten und die Ablesbarkeit erschweren, sind solche Leuchtstofflampen mit einem Heizelement ausgestattet.

Es sind bereits Heizelemente für Leuchtstofflampen bekannt, die als eine außenseitig am Umfang der Leuchtstofflampe angeordnete Wicklung ausgeführt sind. Hierdurch lässt sich eine gezielte Erwärmung der Leuchtstofflampe erreichen, wobei eine Beeinträchtigung der Lichtabstrahlung der Leuchtstofflampe nicht ausgeschlossen werden kann. Nachteilig wirkt sich weiterhin aus, dass die Wicklung zugleich als Spule auf die Leuchtstofflampe wirkt und deren Ansteuerung erschwert oder behindert. Beispielsweise kann dies den Dimmbereich einschränken.

Andere Ausführungsformen sind bekannt, bei denen die Leuchtstofflampe außenseitig mit einer Heizfolie versehen ist. Die Heizfolie wird hierzu beispielsweise auf einer der zu beleuchtenden Fläche abgewandten Seite auf die Leuchtstofflampe laminiert. Nachteilig bei einem derart ausgeführten Heizelement erweist sich der erhebliche Aufwand, der mit dem Anbringen der Heizfolie verbunden ist. Weiterhin ist die Ausführungsform auf Leuchtstofflampen mit vergleichsweise großem Durchmesser beschränkt.

Es sind ferner auch Leuchtstofflampen bekannt, die zur Vermeidung der genannten Probleme mit Überstrom betrieben oder mit einem doppelwandigen Glas ausgestattet werden.

Der Erfindung liegt das Problem zugrunde, eine Beleuchtungsvorrichtung mit einer Leuchtstofflampe mit einem elektrischen Heizelement besonders einfach auszuführen. Dabei soll das Heizelement insbesondere auch zur Verwendung bei Leuchtstofflampen mit lediglich geringem Durchmesser geeignet sein.

Dieses Problem wird erfindungsgemäß dadurch gelöst, dass das Heizelement mit geringem Abstand an einem zu der Leuchtstofflampe benachbarten Bauelement angeordnet ist. Hierdurch kann das Heizelement weitgehend unabhängig von der Leuchtstofflampe hergestellt und montiert werden. Die Baueinheit aus dem Heizelement und der Leuchtstofflampe wird anschließend in unmittelbarer Nähe zu einer Leiterplatte positioniert. Eine Anpassung an die jeweilige Leiterplatte kann dabei leicht durch Verwendung mehrerer oder verschiedener Heizelemente vorgenommen werden. Dabei ist eine Abstimmung des Heizelementes auf die Größe und Bauform der Leuchtstofflampe nicht erforderlich, so dass insbesondere auch extrem dünne oder auch gebogene Leuchtstofflampen auf diese Weise beheizbar sind. Ein möglicher, ungünstiger Einfluss auf die Ansteuerbarkeit der Leuchtstofflampe kann dabei ebenso ausgeschlossen werden wie eine Beeinträchtigung der Lichtabstrahlung.

Besonders vorteilhaft ist es auch, wenn zusätzlich zu dem ersten Heizelement weitere Heizelemente vorgesehen sind, die je nach Art der Leuchtstofflampe unterschiedlich ansteuerbar sind. Dadurch können Helligkeitsunterschiede in verschiedenen Abschnitten der Leuchtstofflampe ausgeglichen und so Anpassungen der Heizelemente an die für die jeweilige Leuchtstofflampe charakteristischen Helligkeitsdifferenzen, beispielsweise durch unterschiedlich leistungsstarke Heizelemente, vorgenommen werden.

Dabei ist es besonders günstig, wenn das Bauelement eine Leiterplatte ist. Hierdurch lässt sich das Heizelement auf der Leiterplatte gemeinsam mit weiteren elektronischen Bauteilen in einem einzigen Arbeitsgang bestücken. Der Herstellungsaufwand wird dadurch weiter reduziert und mögliche Fehlerquellen ausgeschlossen. Zugleich können problemlos je nach gewünschter Heizleistung unterschiedliche oder zusätzliche Heizelemente auf der Leiterplatte angeordnet werden.

Das Heizelement kann ein beliebiger Heizleiter oder auch Heizstrahler sein. Besonders gut eignet sich jedoch eine Weiterbildung der Erfindung, bei der das Heizelement ein Widerstandsheizelement ist. Ein derart ausgeführtes Heizelement erreicht schnell seine Betriebstemperatur und lässt sich problemlos regeln. Dabei sind die Baugröße sowie die Herstellungskosten vergleichsweise gering.

Dabei ist eine Ausführungsform der Erfindung besonders günstig, bei der das Heizelement mit einer Steuereinheit verbunden ist. Hierdurch können wesentliche Kenndaten der Leuchtstofflampe in der Steuereinheit verarbeitet und in ein entsprechendes Signal für das Heizelement umgesetzt werden. Dadurch kann eine Überlastung des Heizelementes oder eine Überhitzung der Leuchtstofflampe vermieden werden.

Besonders günstig ist es dabei, wenn die Steuereinheit mit einem Temperatursensor verbunden ist. Hierdurch kann eine Überhitzung der Leuchtstofflampe ebenso zuverlässig verhindert werden wie eine zu geringe Heizleistung bei niedrigen Umgebungstemperaturen, die zu einer ungleichmäßigen Lichtabstrahlung führt.

Vorteilhaft ist es dabei auch, wenn die Steuereinheit mit einem lichtempfindlichen Sensor verbunden ist. Hierdurch kann das Heizelement exakt entsprechend der von dem Sensor erfassten Helligkeit der Leuchtstofflampe mittels der Steuereinheit angesteuert und so eine gewünschte Lichtabstrahlung der Leuchtstofflampe erreicht werden. Mehrere Lichtsensoren können darüber hinaus auch Helligkeitsunterschiede in verschiedenen Bereichen der Leuchtstofflampe erkennen und ermöglichen dadurch eine gezielte Ansteuerung einzelner Heizelemente.

Eine Ausführungsform der Erfindung ist dadurch besonders vorteilhaft, dass das Heizelement auf eine vorbestimmte, maximale Temperatur begrenzt ist. Ein derart ausgeführtes Heizelement schaltet sich beim Erreichen einer bestimmten Höchsttemperatur selbsttätig ab und sorgt so für eine konstante Temperatur der Leuchtstofflampe. Ein Steuerelement ist hierbei nicht erforderlich.

Eine besonders vorteilhafte Weiterbildung der Erfindung ist dann erreicht, wenn das Heizelement in einer durch die Leuchtstofflampe begrenzten und ein lediglich geringes Volumen aufweisenden Kammer angeordnet ist. Hierdurch braucht lediglich ein geringes, durch die Kammer begrenztes Luftvolumen erwärmt werden. Die gewünschte Temperatur kann daher im Vergleich zu einer Ausführungsform, bei der das Heizelement in einem großvolumigen Reflektor angeordnet ist, wesentlich schneller erreicht werden. Die Kammer ist hierzu beispielsweise auf der einem Beobachter abgewandten Seite angeordnet und liegt gegen den Umfang der Leuchtstofflampe unmittelbar an.

Die Erfindung lässt verschiedene Ausführungsformen zu. Zur weiteren Verdeutlichung ihres Grundprinzips sind zwei davon in der Zeichnung dargestellt und werden nachfolgend beschrieben. Diese zeigt in
- Fig. 1: eine teilweise geschnittene Rückansicht einer Leuchtstofflampe mit mehreren Heizelementen,
- Fig. 2: die in eine Anzeige eingebaute Leuchtstofflampe in einer Seitenansicht,
- Fig. 3: eine in einen Reflektor eingesetzte Leuchtstofflampe.

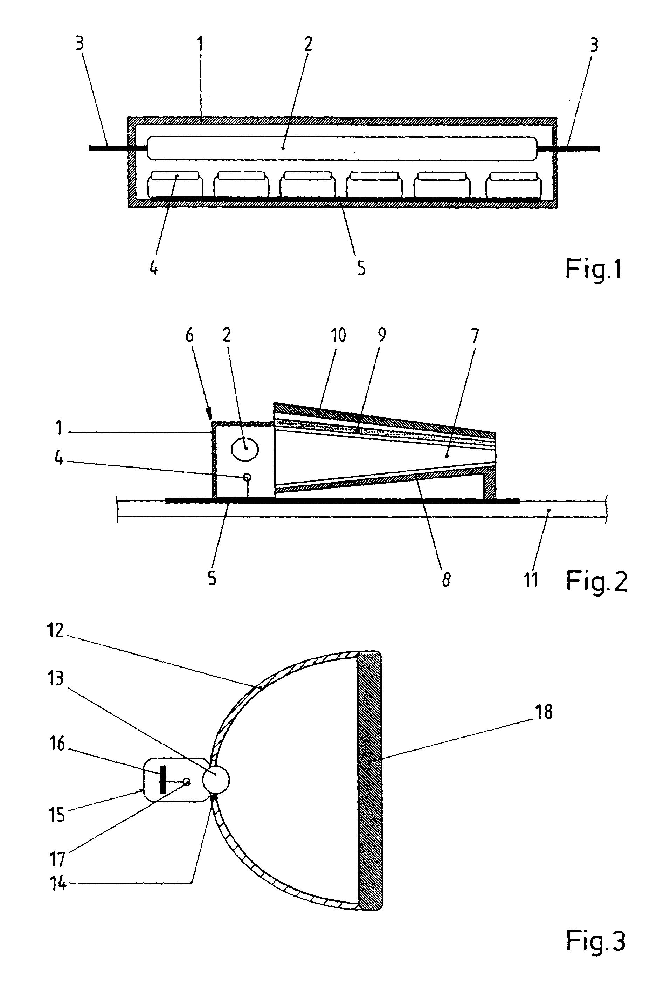

Figur 1 zeigt eine teilweise geschnittene Rückansicht eines Anzeigengehäuses 1 mit einer darin eingesetzten Leuchtstofflampe 2. Die Leuchtstofflampe 2 hat jeweils an ihrem Ende eine Anschlussleitung 3 zur elektrischen Stromversorgung. Unterhalb der Leuchtstofflampe 2 sind mit geringem Abstand zu der Leuchtstofflampe 2 mehrere, nebeneinander angeordnete und als Widerstandsheizelement ausgeführte Heizelemente 4 angeordnet, welche mittels einer nicht dargestellten Steuereinheit einzeln ansteuerbar sind. Die Heizelemente 4 sind auf einer gemeinsamen Leiterplatte 5 kontaktiert und können abweichend von der dargestellten Ausführungsform auch unterschiedliche Abstände zueinander aufweisen. Außerdem können die Widerstandsheizelemente einen unterschiedlichen elektrischen Widerstand aufweisen, je nach Anordnung des jeweiligen Heizelements 4 in bezug auf die Länge der Leuchtstofflampe 2. Durch die gezielte Erwärmung bestimmter Bereiche der Leuchtstofflampe 2 mittels der Heizelemente 4 wird eine gleichmäßig helle Lichtabstrahlung der Leuchtstofflampe 2 auch bei unterschiedlichen Umgebungstemperaturen sichergestellt.

Figur 2 zeigt die in das Anzeigengehäuse 1 einer Anzeige 6 eingesetzte Leuchtstofflampe 2 in einer teilweise geschnittenen Seitenansicht. Die Leuchtstofflampe 2 ist zusammen mit dem Heizelement 4 in dem Anzeigengehäuse 1 angeordnet und kann unmittelbar in einen angrenzenden Lichtleiter 7 einstrahlen. Der Lichtleiter 7 ist an seiner Unterseite von einem Reflektor 8 und an seiner Oberseite durch eine Streuscheibe 9 begrenzt. Durch diese Streuscheibe 9 gelangt das Licht auf die Rückseite eines durchleuchtbaren Displays 10. Die Querschnittfläche des Lichtleiters 7 nimmt mit zunehmendem Abstand von der Leuchtstofflampe 2 ab, so dass ein gleichmäßiger Lichtaustritt durch die Streuscheibe 9 erreicht wird. Die zur Kontaktierung des Heizelementes 4 vorgesehene Leiterplatte 5 ist auf einem lediglich abschnittsweise dargestellten Instrumententräger 11 angeordnet. Neben der Hintergrundbeleuchtung des Displays 10 ist auch eine aktive Beleuchtung von Warnsignalen oder Skalen mittels der Leuchtstofflampe 2 möglich.

Eine weitere, in einen Reflektor 12 eingesetzte Leuchtstofflampe 13 zeigt Figur 3 in einer teilweise geschnittenen Seitenansicht. Hierbei ist die Leuchtstofflampe 13 mit einem Teilbereich ihres Umfanges in eine Ausnehmung 14 des Reflektors 12 eingesetzt und bildet so zugleich eine Begrenzungsfläche einer rückwärtigen Kammer 15. In diese Kammer 15 ist ein mit einer Leiterplatte 16 verbundenes Heizelement 17 eingesetzt. Durch diese Anordnung braucht lediglich ein vergleichsweise geringes Raumvolumen erwärmt zu werden, um die Leuchtstofflampe 13 auf eine gewünschte Betriebstemperatur zu erhitzen und so eine gleichmäßige Hintergrundbeleuchtung eines durchleuchtbaren Displays 18 (z. B. LCD) zu erreichen. Die Erwärmung kann dadurch erheblich schneller und mit einem geringen Energieaufwand erfolgen. Zugleich bleibt die konstruktive Ausgestaltung des Reflektors 12 von dem Heizelement 17 unbeeinflusst, so dass problemlose und vielseitige Anwendungsmöglichkeiten eröffnet werden.

## Patentansprüche

1. Beleuchtungsvorrichtung für eine Anzeige, insbesondere in einem Kraftfahrzeug, mit einer Leuchtstofflampe und mit einem Heizelement für die Leuchtstofflampe, **dadurch gekennzeichnet**, dass das Heizelement (4, 17) mit geringem Abstand an einem zu der Leuchtstofflampe (2, 13) benachbarten Bauelement (Leiterplatte 5, 16) angeordnet ist.

2. Beleuchtungsvorrichtung nach Anspruch 1, **dadurch gekennzeichnet**, dass zusätzlich zu dem ersten Heizelement (4, 17) weitere Heizelemente (4, 17) vorgesehen sind, die je nach Art der Leuchtstofflampe (2, 13) unterschiedlich ansteuerbar sind.

3. Beleuchtungsvorrichtung nach Anspruch 1 oder 2, **dadurch gekennzeichnet**, dass das Bauelement eine Leiterplatte (5, 16) ist.

4. Beleuchtungsvorrichtung nach einem der vorhergehenden Ansprüche, **dadurch gekennzeichnet**, dass das Heizelement (4, 17) ein Widerstandsheizelement ist.

5. Beleuchtungsvorrichtung nach einem der vorhergehenden Ansprüche, **dadurch gekennzeichnet**, dass das Heizelement (4, 17) mit einer Steuereinheit verbunden ist.

6. Beleuchtungsvorrichtung nach Anspruch 5, **dadurch gekennzeichnet**, dass die Steuereinheit mit einem Temperatursensor verbunden ist.

7. Beleuchtungsvorrichtung nach Anspruch 5 oder 6, **dadurch gekennzeichnet**, dass die Steuereinheit mit einem lichtempfindlichen Sensor verbunden ist.

8. Beleuchtungsvorrichtung nach einem der vorhergehenden Ansprüche, **dadurch gekennzeichnet**, dass das Heizelement (4, 17) auf eine vorbestimmte, maximale Temperatur begrenzt ist.

9. Beleuchtungsvorrichtung nach einem der vorhergehenden Ansprüche, **dadurch gekennzeichnet**, dass das Heizelement (4, 17) in einer durch die Leuchtstofflampe (2, 13) begrenzten und ein lediglich geringes Volumen aufweisenden Kammer (15) angeordnet ist.
